# EUROPÄISCHE PATENTSCHRIFT

(11) **EP 1 705 097 B1**
(45) Veröffentlichungstag und Bekanntmachung des Hinweises auf die Patenterteilung: **07.11.2007**
(21) Anmeldenummer: 05006496.3
(22) Anmeldetag: 24.03.2005
(51) Int. Cl.: B62B 7/08

(54) **Zusammenklappbarer Schiebestuhl, insbesondere Reha-Schiebestuhl für Kinder und Jugendliche**
Foldable pushchair, in particular rehabilitation pushchair for children and adolescents
Poussette pliable, notamment poussette de rééducation pour enfants et adolescents

(43) Veröffentlichungstag der Anmeldung: 27.09.2006
(73) Patentinhaber: Horacek, Gregor, 56235 Ransbach-Baumbach (DE)
(72) Erfinder: Horacek, Gregor, 56235 Ransbach-Baumbach (DE)
(74) Vertreter: Quermann, Helmut

(56) Entgegenhaltungen:
- EP-A- 1 366 968
- DE-A1- 4 004 536
- GB-A- 1 419 799
- US-A- 5 622 377
- US-A1- 2004 227 330

## Beschreibung

Die Erfindung betrifft einen zusammenklappbaren Schiebstuhl, insbesondere Reha-Schiebestuhl für Kinder und Jugendliche, mit beidseitig des Stuhles angeordneten vorderen und hinteren Streben zur Aufnahme von Vorder- und Hinterrädern, wobei die vorderen und hinteren Streben jeweils durch ein oder mehrere Querstreben verbunden sind, mit beidseitig angeordneten Längsstreben, die jeweils an den vorderen und hinteren Streben angreifen, mit einem Schiebebügel, der seitliche Ansätze aufweist, die in ausgeklappter Stellung mit den vorderen Streben arretierbar sind, wobei beim Schwenken des Schiebebügels relativ zu den vorderen Streben aus der arretierten Stellung der Ansätze die vorderen und hinteren Streben jeweils aufeinander zu bewegt werden.

Ein solcher zusammenklappbarer Schiebestuhl ist aus der DE 40 04 536 A1, die dem Oberbegriff des Anspruchs 1 entspricht, bekannt. Bei diesem lässt sich ein kompaktes Faltmaß erzeugen, da die kinematischen Voraussetzungen eine parallele Lage von vorderen und hinteren Streben sowie seitlichen Ansätzen des Schiebebügels zulassen.

Nachteilig ist bei diesem Schiebestuhl allerdings, dass die hinteren Streben mittels an dieser befestigter Aufnahmen nur kraftschlüssig mit den vorderen Streben verbunden sind und ansonsten nur mit den Längsstreben und über mit den hinteren Streben verbundene Strebenansätze mit einer Verlängerung des Schiebebügels schwenkbar verbunden sind. Eine stabile, somit formschlüssige Verbindung von vorderen und hinteren Streben ist somit nicht gegeben. Außerdem lösen sich die hinteren Streben beim Anheben des Schiebestuhls von den vorderen Streben, und zwar im Bereich der Aufnahmen. Dies und seitlich wirkende Kräfte beim Manövrieren bedingen, dass sich die vorderen Streben gegenüber den hinteren Streben verschieben. Von Nachteil ist bei dem bekannten Schiebestuhl ferner, dass bei den gegebenen kinematischen Voraussetzungen ein maximal kompaktes Faltmaß nicht erreicht wird, weil der Griffbügel des Schiebebügels in zusammengeklappten Zustand des Schiebestuhls über die unteren Enden der vorderen Streben hinausragt. Schließlich ist von Nachteil, dass bei den gegebenen kinematischen Voraussetzungen der Einsatz von Rädern mit einem Durchmesser von mehr als 250 mm nicht möglich ist, da größere Räder beim Klappvorgang vor Erreichen der Parallellage von vorderen Streben, hinteren Streben und seitlichen Schiebebügelansätzen aneinander stoßen und ein vollständiges Zusammenklappen verhindern.

Ein zusammenklappbarer Schiebestuhl ist ferner aus der GB 1 419 799 bekannt. Dort sind die seitlichen Ansätze des Schiebebügels unmittelbar mit den hinteren Streben schwenkbar verbunden, so dass aufgrund der sich hieraus ergebenden kinematischen Vorgaben der Schiebestuhl sich nicht so zusammenklappen lässt, dass sowohl die vorderen und hinteren Streben als auch der Schiebebügel parallel zu liegen kommen. Die Anordnung der Teile bewirkt vielmehr, dass der Schiebebügel bei zusammengeklapptem Schiebstuhl unter einem spitzen Winkel zu den vorderen und hinteren Streben verläuft. Abgesehen hiervon führt die unmittelbare Lagerung des Schiebebügels in der hinteren Strebe dazu, dass in zusammengeklappter Stellung die jeweiligen Hinterräder jeweils beabstandet zu den Vorderrädern angeordnet sind, wobei der Schiebebügel, kurz vor der zusammengeklappten Stellung des Schiebestuhls, die hinteren Streben nahezu parallel zu den vorderen Streben zieht. Die beabstandete Anordnung der Hinterräder zu den Vorderrädern in zusammengeklappter Stellung des Schiebestuhls bedingt in diesem Zustand einen erhöhten Stauraum.

Es ist Aufgabe der vorliegenden Erfindung einen Schiebestuhl der Eingangs genannten Art so weiterzubilden, dass er die zum Stand der Technik beschriebenen Nachteile grundsätzlich eliminiert und überdies seinerseits eine stabile Verbindung von vorderen und hinteren Streben und andererseits ein möglichst kompaktes Faltmaß auch beim Einsatz von Rädern mit relativ großem Durchmesser, insbesondere mit einem Durchmesser von mehr als 250 mm, aufweist.

Gelöst wird die Aufgabe bei einem zusammenklappbaren Schiebestuhl der Eingangs genannten Art durch folgende Merkmale:
- die vorderen Streben nehmen jeweils einen in deren Längsrichtung frei verschiebbaren Schieber auf,
- in den Schiebern sind die seitlichen Ansätze des Schiebebügels im Bereich deren den vorderen Streben zugewandten Enden schwenkbar gelagert,
- in den Schiebern sind die hinteren Streben im Bereich deren den vorderen Streben zugewandten Enden schwenkbar gelagert,
- beidseitig des Stuhls sind Stützhebel angeordnet, die jeweils an den vorderen Streben, zwischen den Schiebern und den Vorderrädern, und an den seitlichen Ansätzen des Schiebebügels schwenkbar angreifen.

Erfindungsgemäß ist somit vorgesehen, dass auf jeder Seite des Schiebestuhls ein Schieber angeordnet ist, in dem die dieser Seite zugeordnete vordere Strebe und hintere Strebe gelagert ist. Der dieser Seite zugeordnete Stützhebel steuert, da er einerseits an der vorderen Strebe und dem zugeordneten seitlichen Ansatz des Schiebebügels angreift, über den Ansatz des Schiebebügels, der gleichfalls im Schieber gelagert ist, die Verschiebebewegung des Schiebers relativ zur vorderen Strebe. Aufgrund dieser Lagerung der Teile und deren Anordnung ergibt sich eine stabile Gestaltung des Schiebestuhls auf der jeweiligen Seite im Bereich von vorderer Strebe, hinterer Strebe und Ansatz des Schiebebügels.

Vorzugsweise sind die seitlichen Ansätze des Schiebebügels oberhalb der vorderen Streben in den Schiebern schwenkbar gelagert. Des weiteren sind vorzugsweise die hinteren Streben unterhalb der vorderen Streben in den Schiebern schwenkbar gelagert. Ferner greifen vorteilhaft die beidseitig angeordneten Stützhebel jeweils unterhalb der Schieber an den vorderen Streben und jeweils oberhalb der Schieber an den seitlichen Ansätzen des Schiebebügels schwenkbar an. Die vorderen Streben verlaufen zweckmäßig von vorne unten nach hinten oben und schließen insbesondere mit der Aufstandsfläche des Stuhls auf dem Boden, auf dem der Stuhl abrollt, einen Winkel von 35° bis 65° ein. Die hinteren Streben verlaufen entsprechend von hinten unten nach vorne oben und schließen insbesondere mit der Aufstandsfläche des Stuhls einen Winkel von 40° bis 80° ein.

Im erfindungsgemäßen Sinne wird unter Querstrebe bzw. werden unter Querstreben nicht nur ein Stab oder Stäbe verstanden, die die vorderen und hinteren Streben miteinander verbinden, womit der Schiebestuhl beim Zusammenfalten sein Breitenmaß behält. Diese Begriffe sind durchaus umfassend zu verstehen, beispielsweise im Sinne von Kreuzstrebe oder Kreuzstreben. Sind die vorderen und hinteren Streben jeweils durch ein oder mehrere Kreuzstreben verbunden, lässt sich der Schiebestuhl auch, bezogen auf seine Breite, zusammenklappen, wie es aus dem Stand der Technik hinlänglich bekannt ist. Vorzugsweise werden die Kreuzstreben so angesteuert, dass beim Zusammenklappbaren des Schiebestuhls durch Aufeinanderzubewegen der vorderen und hinteren Streben beim Schwenken des Schiebebügels auch die vorderen und hinteren Streben der einen Seite des Schiebestuhls auf die vorderen und hinteren Streben der anderen Seite des Schiebestuhls zu bewegt werden.

Im Sinne der Erfindung können die Längsstreben in unterschiedlicher Art und Weise an den vorderen und hinteren Streben angelenkt sein. Die Längsstreben können beispielsweise unmittelbar mit den vorderen und hinteren Streben verbunden sein. Es ist allerdings auch eine mittelbare Verbindung denkbar, beispielsweise, indem die Längsstrebe über ein auf der jeweiligen Strebe befestigtes Federgehäuse mit der vorderen und / oder hinteren Strebe verbunden ist. Hierdurch stellt sich ein erhöhter Fahrkomfort beim Schieben des Schiebestuhls aufgrund der Federung ein.

Insbesondere die vorderen Räder des Schiebestuhls können lenkbar gestaltet sein, das heißt, es ist das jeweilige Vorderrad in einem Lager drehbar gehalten, das seinerseits um eine vertikale Achse drehbar in der vorderen Strebe oder einem mit diesen verbundenen Ansatzstück gelagert ist.

Finden beim Schiebestuhl vier starre Räder Verwendung, weisen diese insbesondere gleiche Größe auf, beispielsweise einen Durchmesser von 300 mm. Ist der Schiebestuhl vorn mit Lenkrädern versehen, weisen diese beispielsweise einen Durchmesser von 190 mm auf; die starren Hinterräder besitzen einen Durchmesser von beispielsweise 300 mm.

Weitere Merkmale der Erfindung sind in den Unteransprüchen, der Beschreibung der Figuren und den Figuren selbst dargestellt, wobei bemerkt wird, dass alle Einzelmerkmale und alle Kombination von Einzelmerkmalen weitere erfinderische Ausgestaltungen darstellen.

In den Figuren ist die Erfindung anhand zweier Ausführungsbeispiele erläutert, ohne hierauf beschränkt zu sein.

Es zeigt:
- Figur 1: eine erste Ausführungsform eines zusammenklappbaren Schiebestuhls in einer perspektivischen Ansicht, veranschaulicht ohne Sitzteil, in ausgeklappter Stellung, mit nicht lenkbaren Vorderrädern,
- Figur 2: eine zweite Ausführungsform eines zusammenklappbaren Schiebestuhls in einer perspektivischen Ansicht, veranschaulicht ohne Sitzteil, in ausgeklappter Stellung, mit lenkbaren Vorderrädern,
- Figur 3: eine Seitenansicht des in Figur 2 gezeigten Schiebestuhls,
- Figuren 4 und 5: den in den Figuren 2 und 3 gezeigten Schiebestuhl in Zwischenstellungen beim Zusammenklappen des Schiebestuhls, und
- Figur 6: den Schiebestuhl gemäß den Figuren 2 bis 5, in vollständig zusammengeklapptem Zustand, allerdings zur besseren Veranschaulichung der einzelnen Teile des Schiebestuhls, ohne das den Schiebestuhl abdeckende Hinterrad veranschaulicht.

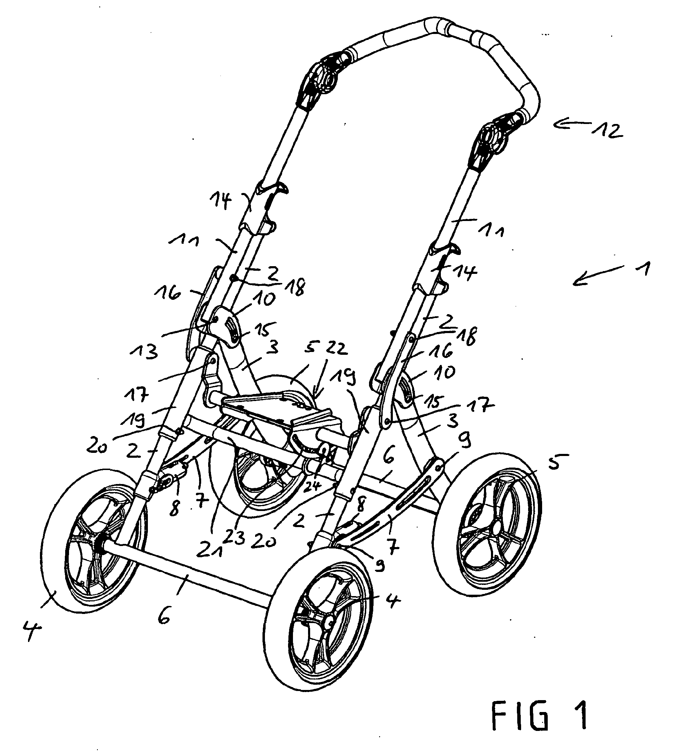

Figur 1 zeigt den auseinandergeklappten Reha-Schiebestuhl 1 für Kinder und Jugendliche. Er weist auf beidseitig des Stuhls 1 angeordnete vordere Streben 2 und hintere Streben 3 zur Aufnahme von Vorderrädern 4 und Hinterrädern 5 auf. Die vorderen und hinteren Streben 2, 3 sind jeweils durch Querstreben 6 verbunden. Beidseitig sind Längsstreben 7 angeordnet, die jeweils an den vorderen und hinteren Streben 2, 3 angreifen. Die jeweilige Längsstrebe 7 greift dabei mittelbar an der vorderen Strebe 2 an, insofern ist mit der vorderen Strebe 2 ein Federgehäuse 8 verbunden, an dem die Längsstrebe 7 angreift. Die Schwenkachsen, im Bereich derer die jeweilige Längsstrebe 7 in der hinteren Strebe 3 und dem Federgehäuse 8 gelagert ist, sind mit der Bezugsziffer 9 bezeichnet.

Die vorderen Streben 2 nehmen jeweils einen in deren Längsrichtung frei verschiebbaren Schieber 10 auf. Seitliche Ansätze 11 eines Schiebebügels 12 sind oberhalb der vorderen Streben 2 in den Schiebern 10 um Schwenkachsen 13 schwenkbar gelagert. Die seitlichen Ansätze 11 des Schiebebügels 12 nehmen in Längsrichtung der Ansätze 11 verschiebliche Arretierhülsen 14 auf, die in der gezeigten ausgeklappten Stellung des Schiebestuhls 1 auf die oberen freien Enden der vorderen Streben 2 absenkbar sind und diese formschlüssig hintergreifen, wodurch an den vorderen Streben 2 anliegenden seitlichen Ansätze 11 des Schiebebügels 12 nicht von den vorderen Streben 2 weg verschwenkt werden können.

Die hinteren Streben 3 sind unterhalb der vorderen Streben 2 in den Schiebern 10 um die Schwenkachsen 15 schwenkbar gelagert. Beidseitig des Schiebestuhls 1 sind außen Stützhebel 16 angeordnet, die jeweils unterhalb der Schieber 10 an den vorderen Streben 2 um Schwenkachsen 17 und jeweils oberhalb der Schieber 10 an den seitlichen Ansätzen 11 des Schiebebügels 12 um Schwenkachsen 18 schwenkbar angreifen.

Demnach nehmen die vorderen Streben 2 jeweils einen in deren Längsrichtung frei verschiebbaren Schieber 10 auf. In den Schiebern 10 sind die seitlichen Ansätze 11 des Schiebebügels 12 im Bereich deren den vorderen Streben 2 zugewandten Enden schwenkbar gelagert. In den Schiebern 10 sind die hinteren Streben 3 im Bereich deren den vorderen Streben 2 zugewandten Enden schwenkbar gelagert. Beidseitig des Schiebestuhls 1 angeordnete Stützhebel 16 greifen jeweils an den vorderen Streben 2, zwischen den Schiebern 10 und den Vorderrädern 4, und an den seitlichen Ansätzen 11 des Schiebebügels 12 schwenkbar an.

Die vorderen Streben 2 verlaufen von vorne unten nach hinten oben und schließen insbesondere mit der Aufstandsfläche des Stuhls 1 einen Winkel von 35° bis 65° ein. Die hinteren Streben 3 verlaufen von hinten unten nach vorne oben und schließen insbesondere mit der offenen Fläche des Stuhls 1 einen Winkel von 40° bis 80° ein.

Auf der jeweiligen vorderen Strebe 2 ist ein hülsenförmiger Körper 19 festgelegt, und zwar mittels einer diesen und die vordere Strebe 2 durchsetzenden Schrauben-Mutter-Verbindung 20. Den jeweiligen hülsenförmigen Körper 19 und die vordere Strebe 2 durchsetzt im Bereich des dem Schieber 10 zugewandten Endes des hülsenförmigen Körpers 19 die Schwenkachse 17. Im Bereich des anderen Endes des jeweiligen hülsenförmigen Körpers 19 ist mit diesem ist ein U-förmig abgewinkeltes Rohr 21 verbunden, wobei das U senkrecht zu den beiden vorderen Streben 2 in Richtung der Längsstreben 7 orientiert ist. In den beiden Schwenkachsen 17 ist eine Sitzaufnahme 22 schwenkbar gelagert, die der Aufnahme und Lagerung des nicht veranschaulichten Sitzes für das Kind bzw. den Jugendlichen dient. Diese Sitzaufnahme 22 ist unten mit einer Schlitzaufnahme 23 versehen, die kreisförmig, konzentrisch zur Schwenkachse 17 verläuft. Die die Funktion einer Kulisse aufweisende Schlitzaufnahme 23 durchsetzt eine Einrichtung 24, die mit dem Rohr 21 verbunden ist und die dem variablen Positionieren der Sitzaufnahme 22 in den unterschiedlichen Schwenkstellungen relativ zur Schwenkachse 17 dient.

Bei der Ausführungsform nach der Figur 1 sind vier starre Räder 4, 5 vorgesehen, und zwar mit gleicher Größe, beispielsweise mit einem Durchmesser von jeweils 300 mm.

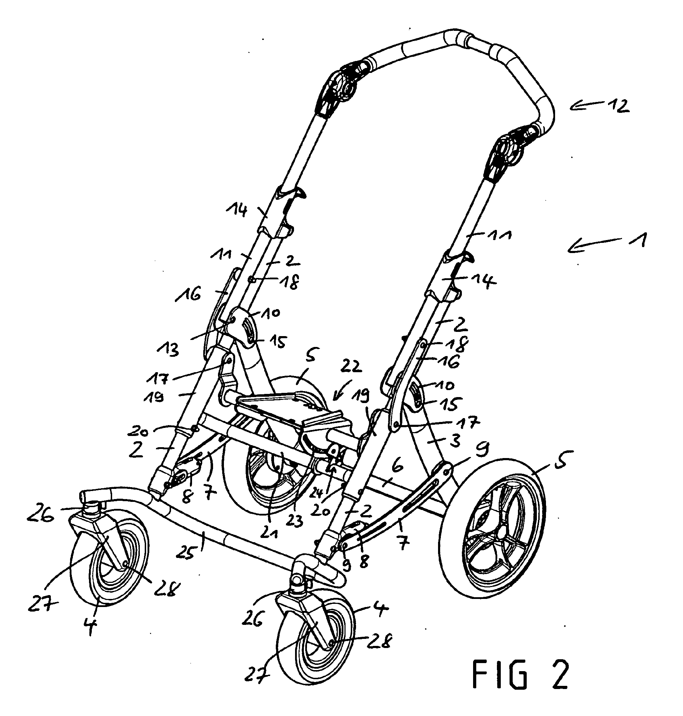

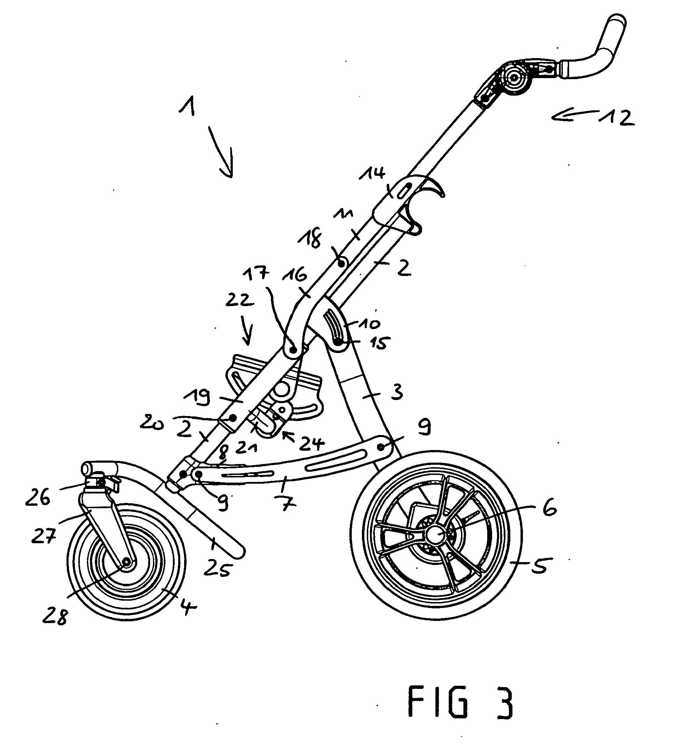

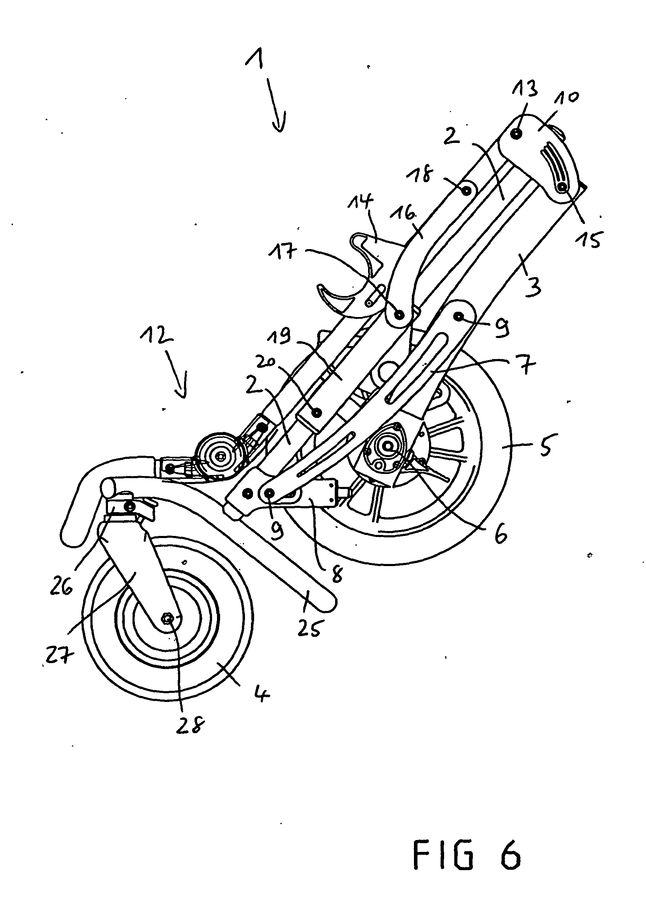

Die Ausführungsform nach den Figuren 2 bis 6 unterscheiden sich von derjenigen nach der Figur 1 dadurch, dass der Schiebestuhl 1 mit vorderen Lenkrädern 4 versehen ist, die beispielsweise einen Durchmesser von jeweils 190 mm aufweisen. Die Hinterräder 5 sind nach wie vor starr, mit einem Durchmesser von jeweils 300 mm.

Bei dieser zweiten Ausführungsform ist mit den unteren freien Enden der vorderen Streben 2 ein im wesentlichen U-förmiger Bügel 25 verbunden, der im Bereich seiner beiden freien Enden der jeweiligen Schwenkachse 26 schwenkbar ein U-förmiges Lagerteil 27 aufnimmt, das der drehbaren Aufnahme des zugeordneten Vorderrades 4 um eine Schwenkachse 28 des Lagerteils 27 dient.

Der Vorgang zum Zusammenklappen bzw. Auseinanderklappen des Schiebestuhls 1 ist bei den in den Figuren 1 bis 6 veranschaulichten beiden Ausführungsformen gleich. Er ist veranschaulicht, in diversen Zwischenschritten und in der zusammengeklappten Stellung für die zweite Ausführungsform gemäß der Figuren 2 bis 6, auf die bei der nachfolgenden Beschreibung Bezug genommen wird:

Wesentlich sind somit bei dem erfindungsgemäßen Schiebstuhl 1 die jeweils beidseitig angeordneten Schieber 10 und Stützhebel 16. Die Schieber 10 sind auf die vorderen Streben 2 von oben aufgeschoben und auf diesen frei verschiebbar. In den oberhalb der vorderen Streben 2 positionierten

Abschnitten der Schieber 10 sind die seitlichen Ansätze 11 des Schiebebügels 12 in der Achse 13 schwenkbar gelagert. In den unterhalb der vorderen Streben 2 positionierten Abschnitten der Schieber 10 sind die hinteren Streben 3 in der Achse 15 schwenkbar gelagert. - Somit ist bereits eine formschlüssige Verbindung von vorderen Streben 2 und hinteren Streben 3 gegeben.

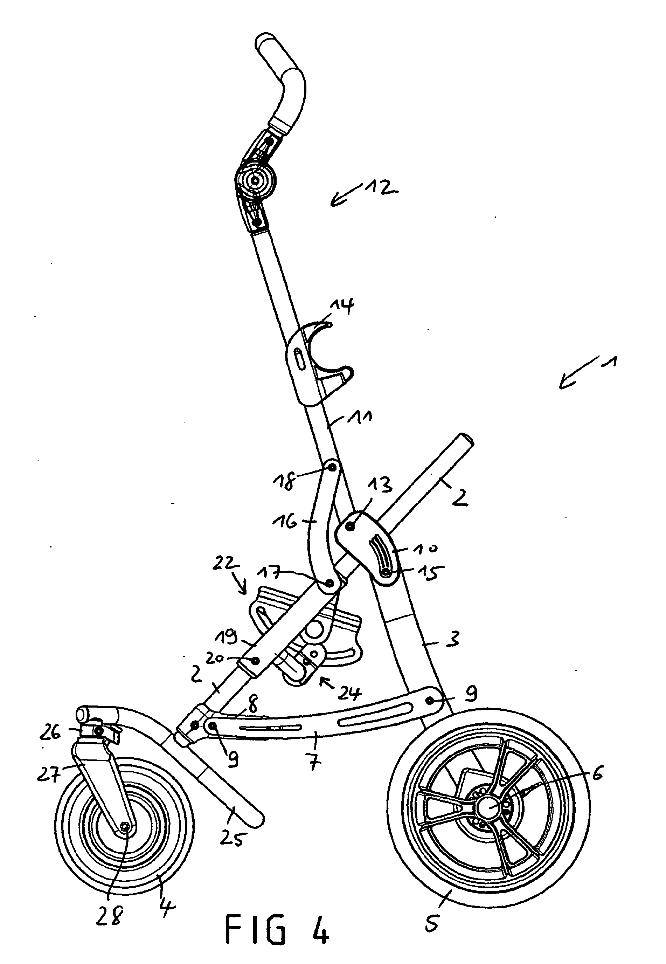

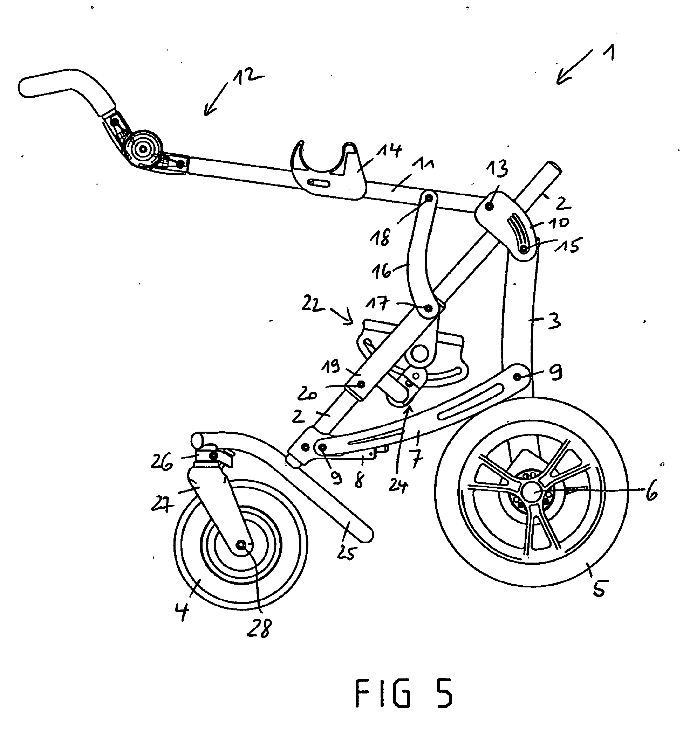

Die Stützhebel 16 steuern den Klappvorgang, wie es aus der Darstellung der Zwischenstellungen des Schiebestuhls beim Klappen gemäß der Figuren 4 und 5 ersichtlich ist. Dabei sind die Stützhebel 16 mit den seitlichen Ansätzen 11 des Schiebebügels 12 in der Achse 18 und mit den vorderen Streben 2 in der Achse 17 schwenkbar gelagert. Beim Verschwenken des Schiebebügels 12 nach vorn unten - zwecks Zusammenklappen des Schiebestuhls 1 - werden die Stützhebel 16 zunächst ebenfalls in Richtung nach vorn unten verschwenkt, wobei die Schieber 10 durch die Schwenkbewegung der unteren Abschnitte der seitlichen Ansätze 11 des Schiebebügels 12 auf den vorderen Streben 2 nach oben verschoben werden und so die hinteren Streben 3 mit nach oben ziehen. Sobald während dieses Klappvorgangs die Achsen 13, 15 und 18 auf einer Ebene liegen, kehrt sich die Schwenkbewegung der Stützhebel 16 wieder nach hinten oben um, so dass sie am Ende des Klappvorgangs in die kompakte Ausgangsposition kommen, während die seitlichen Ansätze 11 des Schiebebügels 12 weiter nach vorn unten schwenken und die Schieber 10 weiter in Richtung des oberen Endes der vorderen Streben verschoben werden. Die Längsstreben 7 sind mit der Achse 9 der hinteren Streben 3 und der Achse 9 der vorderen Streben 2 jeweils schwenkbar verbunden und führen während des Klappvorgangs die hinteren Streben 3 derart, dass diese am Ende des Klappvorgangs möglichst nahe an den vorderen Streben 2 anliegen. Da die hinteren Streben 3 in der dargestellten Ausführung aus gestalterischen Gründen gekrümmt sind, kann natürlich keine parallele Lage zu den vorderen Streben 2 erreicht werden.

Abmessung und Positionierung der Stützhebel 16 bestimmen die Position der Schieber 10 und somit die des Schiebebügels 12 im jeweils aufgeklappten bzw. zusammengeklappten Zustand. Optimale Abmessungen und Positionierungen ergeben sich aus Radstand, Radgröße und der Forderung nach einem möglichst kurzem Klappmaß. Somit sind bei gegebenem Radstand und gegebener Radgröße die vorderen Streben 2 möglichst kurz zu wählen und sowohl die Position (Achsen 17 und 18) als auch die Länge (Abstand zwischen den Achsen 17 und 18) der Stützhebel 16 so zu bestimmen, dass die jeweils oberen Enden der vorderen Streben 2 und Schieber 10 am Ende des Klappvorgangs nahezu auf einer Ebene (deckungsgleich) liegen. Die Länge und Position der Längsstreben 7 (Achsen 9 und 9) ist so zu bestimmen, dass einerseits im ausgeklappten Zustand der geforderte Radstand erreicht wird und andererseits im zusammengeklappten Zustand die hinteren Streben 3 möglichst nah an den vorderen Streben 2 zu liegen kommen.

## Patentansprüche

1. Zusammenklappbarer Schiebestuhl (1), insbesondere Reha-Schiebestuhl für Kinder und Jugendliche, mit beidseitig des Stuhles (1) angeordneten vorderen und hinteren Streben (2, 3) zur Aufnahme von Vorder- und Hinterrädern (4, 5), wobei die vorderen und hinteren Streben (2, 3) jeweils durch ein oder mehrere Querstreben (6, 21, 25) verbunden sind, mit beidseitig angeordneten Längsstreben (7), die jeweils an den vorderen und hinteren Streben (2, 3) angreifen, mit einem Schiebebügel (12), der seitliche Ansätze (11) aufweist, die in ausgeklappter Stellung mit den vorderen Streben (2) arretierbar sind, wobei beim Schwenken des Schiebebügels (12) relativ zu den vorderen Streben (2) aus der arretierten Stellung der Ansätze (11) die vorderen und hinteren Streben (2, 3) jeweils aufeinander zu bewegt werden,
**gekennzeichnet durch** folgende Merkmale:
- die vorderen Streben (2) nehmen jeweils einen in deren Längsrichtung frei verschiebbaren Schieber (10) auf,
- in den Schiebern (10) sind die seitlichen Ansätze (11) des Schiebebügels (12) im Bereich deren den vorderen Streben (2) zugeordneten Enden schwenkbar gelagert,
- in den Schiebern (10) sind die hinteren Streben (3) im Bereich deren den vorderen Streben (2) zugewandten Enden schwenkbar gelagert,
- beidseitig des Stuhls (1) sind Stützhebel (16) angeordnet, die jeweils an den vorderen Streben (2), zwischen den Schiebern (10) und den Vorderrädern (4), und an den seitlichen Ansätzen (11) des Schiebebügels (12) schwenkbar angreifen.

2. Schiebestuhl nach Anspruch 1, **dadurch gekennzeichnet, dass** die seitlichen Ansätze (11) des Schiebebügels (12) oberhalb der vorderen Streben (2) in den Schiebern (10) schwenkbar gelagert sind.

3. Schiebestuhl nach Anspruch 1 oder 2, **dadurch gekennzeichnet, dass** die hinteren Streben (3) unterhalb der vorderen Streben (2) in den Schiebern (10) schwenkbar gelagert sind.

4. Schiebestuhl nach einem der Ansprüche 1 bis 3, **dadurch gekennzeichnet, das**s die beidseitig angeordneten Stützhebel (16) jeweils unterhalb der Schieber (10) an den vorderen Streben (2) und jeweils oberhalb der Schieber (10) an den seitlichen Ansätzen (11) des Schiebebügels (12) schwenkbar angreifen.

5. Schiebestuhl nach einem der Ansprüche 1 bis 4, **dadurch gekennzeichnet, dass** die vorderen Streben (2) von vorne unten nach hinten oben verlaufen und insbesondere mit der Aufstandsfläche des Stuhls (1) einen Winkel von 35° bis 60° einschließen.

6. Schiebestuhl nach einem der Ansprüche 1 bis 5, **dadurch gekennzeichnet, dass** die hinteren Streben (3) von hinten unten nach vorne oben verlaufen und insbesondere mit der Aufstandsfläche des Stuhls (1) einen Winkel von 40° bis 80° einschließen.

7. Schiebstuhl nach einem der Ansprüche 1 bis 6, **dadurch gekennzeichnet, dass** die Querstrebe (6, 21, 25) bzw. die Querstreben (6, 25) als Stab oder Kreuzstrebe ausgebildet sind.

8. Schiebestuhl nach einem der Ansprüche 1 bis 7, **dadurch gekennzeichnet, dass** die Längsstreben (7) unmittelbar mit den vorderen Streben (2) und / oder hinteren Streben (3) oder mittelbar, beispielsweise über ein in der jeweiligen Strebe (2 bzw. 3) gelagertes Federgehäuse (8), mit der vorderen und / oder hinteren Strebe (2, 3) verbunden ist.

9. Schiebestuhl nach einem der Ansprüche 1 bis 8, **dadurch gekennzeichnet, dass** die vorderen Räder (4) lenkbar sind.

10. Schiebestuhl nach einem der Ansprüche 1 bis 9, **dadurch gekennzeichnet, dass** die vorderen und / oder hinteren Räder (4, 5) einen Durchmesser von mehr als 250 mm aufweisen.

## Claims

1. Collapsible push chair (1), in particular a rehabilitation push chair for children and youngsters, comprising front and rear struts (2, 3), disposed on both sides of the chair (1), for the reception of front and rear wheels (4, 5), the front and rear struts (2, 3) being respectively connected by one or more transverse struts (6, 21, 25); comprising bilaterally disposed longitudinal struts (7), which respectively act upon the front and rear struts (2, 3); comprising a push handle (12) having lateral extensions (11) which, in the unfolded setting, can be locked in place with the front struts (2), when the push handle (12) is pivoted relative to the front struts (2) out of the locked setting of the extensions (11), the front struts and rear struts (2, 3) being moved respectively closer together,
**characterized by** the following features:
- the front struts (2) respectively receive a slide (10) which is freely displaceable in their longitudinal direction,
- in the slides (10), the lateral extensions (11) of the push handle (12) are mounted pivotably in the region of their ends facing the front struts (2),
- in the slides (10), the rear struts (3) are mounted pivotably in the region of their ends facing the front struts (2),
- on both sides of the chair (1) there are disposed supporting levers (16), which respectively act pivotably upon the front struts (2), between the slides (10) and the front wheels (4), and upon the lateral extensions (11) of the push handle (12).

2. Push chair according to Claim 1, **characterized in that** the lateral extensions (11) of the push handle (12) are pivotably mounted above the front struts (2) in the slides (10).

3. Push chair according to Claim 1 or 2, **characterized in that** the rear struts (3) are pivotably mounted beneath the front struts (2) in the slides (10).

4. Push chair according to one of Claims 1 to 3, **characterized in that** the bilaterally disposed supporting levers (16) respectively act pivotably beneath the slides (10) upon the front struts (2) and respectively above the slides (10) upon the lateral extensions (11) of the push handle (12).

5. Push chair according to one of Claims 1 to 4, **characterized in that** the front struts (2) run from front-bottom to back-top and, in particular, form with the ground contact area of the chair (1) an angle of 35° to 60°.

6. Push chair according to one of Claims 1 to 5, **characterized in that** the rear struts (3) run from back-bottom to front-top and, in particular, form with the ground contact area of the chair (1) an angle of 40° to 80°.

7. Push chair according to one of Claims 1 to 6, **characterized in that** the transverse strut (6, 21, 25) or the transverse struts (6, 25) are configured in the form of a rod or cross-strut.

8. Push chair according to one of Claims 1 to 7, **characterized in that** the longitudinal struts (7) are connected directly to the front struts (2) and/or rear struts (3), or indirectly, for example via a spring housing (8) mounted in the respective strut (2 or 3), to the front and/or rear strut (2, 3).

9. Push chair according to one of Claims 1 to 8, **characterized in that** the front wheels (4) are steerable.

10. Push chair according to one of Claims 1 to 9, **characterized in that** the front and/or rear wheels (4, 5) have a diameter of more than 250 mm.

## Revendications

1. Poussette pliable (1), en particulier poussette de rééducation pour enfants et adolescents, comportant des entretoises avant et arrière (2, 3) disposées de part et d'autre de la poussette (1) en vue de recevoir des roues avant et arrière (4, 5), dans laquelle les entretoises avant et arrière (2, 3) sont respectivement reliées par une ou plusieurs traverses (6, 21, 25), des longerons (7) disposés de part et d'autre, qui sont attachés respectivement aux entretoises avant et arrière (2, 3), et un guidon coulissant (12), présentant des rallonges (11) qui, en position dépliée, peuvent être bloquées avec les entretoises avant (2), dans laquelle, lorsque l'on fait pivoter le guidon coulissant (12) par rapport aux entretoises avant (2) à partir de la position bloquée des rallonges (11), les entretoises avant et arrière (2, 3) se déplacent chaque fois l'une vers l'autre, **caractérisée par** les caractéristiques suivantes:
- les entretoises avant (2) comprennent chacune un coulisseau (10) coulissant librement dans leur direction longitudinale,
- les rallonges latérales (11) du guidon coulissant (12) sont supportées de manière pivotante dans les coulisseaux (10) dans la région de leurs extrémités tournées vers les entretoises avant (2),
- les entretoises arrière (3) sont supportées de manière pivotante dans les coulisseaux (10) dans la région de leurs extrémités tournées vers les entretoises avant (2),
- de part et d'autre de la poussette (1), il est prévu des leviers d'appui (16), qui sont respectivement attachés de manière pivotante aux entretoises avant (2), entre les coulisseaux (10) et les roues avant (4), et aux rallonges latérales (11) du guidon coulissant (12).

2. Poussette selon la revendication 1, **caractérisée en ce que** les rallonges latérales (11) du guidon coulissant (12) sont supportées de manière pivotante dans les coulisseaux (10) au-dessus des entretoises avant (2).

3. Poussette selon la revendication 1 ou 2, **caractérisée en ce que** les entretoises arrière (3) sont supportées de manière pivotante dans les coulisseaux (10) en dessous des entretoises avant (2).

4. Poussette selon l'une quelconque des revendications 1 à 3, **caractérisée en ce que** les leviers d'appui (16) disposés de part et d'autre sont respectivement attachés de manière pivotante aux entretoises avant (2) en dessous des coulisseaux (10) et aux rallonges latérales (11) du guidon coulissant (12) au-dessus des coulisseaux (10).

5. Poussette selon l'une quelconque des revendications 1 à 4, **caractérisée en ce que** les entretoises avant (2) sont orientées du bas à l'avant vers le haut à l'arrière et forment en particulier avec la surface de roulement de la poussette (1) un angle de 35° à 60°.

6. Poussette selon l'une quelconque des revendications 1 à 5, **caractérisée en ce que** les entretoises arrière (3) sont orientées du bas à l'arrière vers le haut à l'avant et forment en particulier avec la surface de roulement de la poussette (1) un angle de 40° à 80°.

7. Poussette selon l'une quelconque des revendications 1 à 6, **caractérisée en ce que** les traverses (6, 21, 25) ou les traverses (6, 25) sont des barres ou des croisillons.

8. Poussette selon l'une quelconque des revendications 1 à 7, **caractérisée en ce que** les longerons (7) sont reliés directement aux entretoises avant (2) et/ou aux entretoises arrière (3) ou indirectement, par exemple par une boîte à ressort (8) placée dans l'entretoise respective (2 ou 3), à l'entretoise avant et/ou arrière (2, 3).

9. Poussette selon l'une quelconque des revendications 1 à 8, **caractérisée en ce que** les roues avant (4) sont pivotantes.

10. Poussette selon l'une quelconque des revendications 1 à 9, **caractérisée ce que** les roues avant et/ou arrière (4, 5) présentent un diamètre de plus de 250 mm.
